# EUROPEAN PATENT APPLICATION

(11) **EP 4 567 598 A1**
(43) Date of publication of application: **11.06.2025**
(21) Application number: 24191308.6
(22) Date of filing: 26.07.2024
(51) Int. Cl.: G06F 9/50, G06F 9/48

(54) **RESOURCE SCHEDULING METHOD, DEVICE, SYSTEM AND STORAGE MEDIUM**

(30) Priority: 07.12.2023 CN 202311674435
(71) Applicant: Beijing Volcano Engine Technology Co., Ltd., Beijing 100190 (CN)
(72) Inventor: REN, Yuquan, Beijing, 100028 (CN); SONG, Xinyi, Beijing, 100028 (CN); LIU, Meng, Beijing, 100028 (CN); LI, Bing, Beijing, 100028 (CN)
(74) Representative: Dentons UK and Middle East LLP

(57) **Abstract**

A resource scheduling method, device, and system, and a storage medium. The method includes: acquiring (S101) a target resource allocation object to be scheduled; allocating (S102), from a plurality of candidate scheduler instances, a target scheduler instance for the target resource allocation object, and pre-allocating, by the target scheduler instance and from a resource node cluster, a resource node for the target resource allocation object, to obtain a pre-allocated resource node corresponding to the target resource allocation object; performing (S103) conflict detection on the pre-allocated resource node based on an optimistic concurrency strategy, and preempting the pre-allocated resource node after passing the conflict detection; and scheduling (S104) the target resource allocation object to run on the pre-allocated resource node.

## Description

### TECHNICAL FIELD

The present disclosure relates to the technical field of computers, and in particular, to a resource scheduling method, device, system and a storage medium.

### BACKGROUND

Cloud native is a cloud technology product system established based on a distributed cloud of distributed deployment and unified operation management using techniques such as containers, microservices, and developers operations (DevOps). In the cloud native system, a resource scheduling system is typically deployed, which can allocate resource nodes for various services of clients and enable the resource nodes to run distributed services.

Since a cloud server needs to bear a large number of microservices, a throughput is a crucial property of the resource scheduling system.

### SUMMARY

Embodiments of the present disclosure provide a resource scheduling method, device, and system, and a storage medium so as to increase a throughput in a scheduling process.

In a first aspect, embodiments of the present disclosure provide a resource scheduling method, comprising: acquiring a target resource allocation object to be scheduled; allocating, from a plurality of candidate scheduler instances, a target scheduler instance for the target resource allocation object, and pre-allocating, by the target scheduler instance and from a resource node cluster, a resource node for the target resource allocation object, to obtain a pre-allocated resource node corresponding to the target resource allocation object; performing conflict detection on the pre-allocated resource node based on an optimistic concurrency strategy, and preempting the pre-allocated resource node after passing the conflict detection; and scheduling the target resource allocation object to run on the pre-allocated resource node.

In a second aspect, embodiments of the present disclosure provide a resource scheduling device, comprising: an interface service unit configured to acquire a target resource allocation object to be scheduled; a first scheduling unit configured to allocate, from a plurality of candidate scheduler instances, a target scheduler instance for the target resource allocation object; a second scheduling unit configured to pre-allocate, by the target scheduler instance and from a resource node cluster, a resource node for the target resource allocation object, to obtain a pre-allocated resource node corresponding to the target resource allocation object; and a scheduling execution unit configured to perform conflict detection on the pre-allocated resource node based on an optimistic concurrency strategy, and preempt the pre-allocated resource node after passing the conflict detection, and schedule the target resource allocation object to run on the pre-allocated resource node.

In a third aspect, embodiments of the present disclosure provide a resource scheduling system, comprising an interface server, a first scheduling terminal, a second scheduling terminal, a scheduling execution terminal, and a resource node cluster, wherein the interface server is configured to acquire a target resource allocation object to be scheduled; the first scheduling terminal is configured to allocate, from a plurality of candidate second scheduling terminals, a target second scheduling terminal for the target resource allocation object; the second scheduling terminal is configured to pre-allocate, from the resource node cluster, a resource node for the target resource allocation object, to obtain a pre-allocated resource node corresponding to the target resource allocation object; and the scheduling execution terminal is configured to perform conflict detection on the pre-allocated resource node based on an optimistic concurrency strategy, preempt the pre-allocated resource node after passing the conflict detection, and schedule the target resource allocation object to run on the pre-allocated resource node.

In a fourth aspect, embodiments of the present disclosure provide an electronic device, comprising at least one processor and a memory, wherein the memory stores computer-executable instructions, and the at least one processor is configured to execute the computer-executable instructions stored on the memory and is caused to perform the method as described in the first aspect and various variants of the first aspect.

In a fifth aspect, embodiments of the present disclosure provide a computer-readable storage medium, storing computer-executable instructions which, when executed by a processor, cause the processor to implement the method as described in the first aspect and various variants of the first aspect.

In a sixth aspect, embodiments of the present disclosure provide a computer program product, comprising computer-executable instructions which, when executed by a processor, cause the processor to implement the method as described in the first aspect and various variants of the first aspect.

It should be understood that the above general description and the following detailed description are merely exemplary and explanatory, and are non-limiting for the technical solutions of the present disclosure.

### BRIEF DESCRIPTION OF DRAWINGS

To clearly illustrate the technical solutions of the embodiments of the present disclosure, a brief introduction to the drawings referenced in the embodiments will be provided below. These drawings are incorporated into the specification and form a part of this specification. The drawings illustrate embodiments consistent with the present disclosure and, together with the description, serve to explain the technical solutions of the present disclosure. It should be understood that the drawings below only show some embodiments of the present disclosure and should not be considered as limiting the scope. For those skilled in the art, other related drawings can be obtained without inventive efforts based on these drawings.
Fig. 1 illustrates a flowchart of a resource scheduling method provided by some embodiments of the present disclosure;
Fig. 2 illustrates a schematic diagram of a resource scheduling system provided by some embodiments of the present disclosure;
Fig. 3 illustrates a schematic diagram of another resource scheduling system provided by some embodiments of the present disclosure;
Fig. 4 illustrates a flowchart of resource scheduling provided by some embodiments of the present disclosure;
Fig. 5 illustrates a structural diagram of a resource scheduling device provided by some embodiments of the present disclosure; and
Fig. 6 illustrates a structural diagram of an electronic device provided by some embodiments of the present disclosure.

### DETAILED DESCRIPTION

To make the objectives, technical solutions, and advantages of the embodiments of the present disclosure clearer, the following detailed description of the technical solutions in the embodiments of the present disclosure will be provided in conjunction with the drawings in the embodiments. Obviously, the described embodiments are merely part of the embodiments of the present disclosure, not all of them. The components of the embodiments of the present disclosure described and shown here can be arranged and designed in various different configurations. Therefore, the detailed description of the embodiments of the present disclosure below is not intended to limit the scope of the present disclosure as claimed, but rather to represent selected embodiments of the present disclosure. Based on the embodiments of the present disclosure, all other embodiments obtained by those skilled in the art without creative efforts fall within the protection scope of the present disclosure.

In recent years, with the popularity of the cloud native concept, more and more companies are making cloud native transformations. Kubernetes, as the de facto standard in the field of cloud native orchestration and scheduling, has been accepted and endorsed by more and more companies.

In some application scenarios, in addition to Kubernetes, there may be other orchestration and scheduling systems such as Yarn for managing different types of services. However, it is difficult for resources to flow between different orchestration and scheduling systems. Increasing a resource utilization ratio by means of mixed deployment is at a high cost, and types of applications that can be deployed in a mixed manner are relatively limited. Therefore, there is a need for a scheduling system that supports various orchestration and scheduling systems and supports scheduling of various types of applications, including microservices, big data, training tasks, and the like, meets requirements of different types of businesses in terms of function and performance, and guarantees expandability, and is prone to adding new functions and supporting new scenarios.

Some scheduling systems in the prior art have problems to different extents in terms of function comprehensiveness, performance, and expandability. For example, Kubernetes default scheduler has a low throughput, and insufficient supporting capability for offline and training tasks. Yarn scheduler has an ordinary throughput, and is disadvantageous in its insufficient supporting capability for microtopologies, heterogeneous resources, and the like, and its poor expandability, and the like.

In order to solve the above technical problems, the present disclosure provides a resource scheduling method, including: acquiring a target resource allocation object to be scheduled; allocating, from a plurality of candidate scheduler instances, a target scheduler instance for the target resource allocation object, and pre-allocating, by the target scheduler instance and from a resource node cluster, a resource node for the target resource allocation object, to obtain a pre-allocated resource node corresponding to the target resource allocation object; performing conflict detection on the pre-allocated resource node based on an optimistic concurrency strategy, and preempting the pre-allocated resource node after passing the conflict detection; and scheduling the target resource allocation object to run on the pre-allocated resource node. By allocating the scheduler instance for the target resource allocation object, pre-allocating a resource node first by the scheduler instance, and finally determining the resource node using conflict detection, concurrent scheduling of a plurality of schedulers can be realized, and a throughput in a scheduling process can be increased. Moreover, the target resource allocation objects may be various types of task instances such as any microservices, big data, and training tasks, or may be derived from different orchestration and scheduling systems (such as Kubernetes and Yarn). The compatibility with the orchestration and scheduling systems can be realized, and expansion can be achieved easily.

A resource scheduling system may be deployed at a cloud server. The cloud server may be a distributed server. A resource node may be a computing node in the cloud server. Computing resources such as a processor, a memory, a readable storage medium, and a graphics processing unit are deployed on the resource node. The resource node can establish a container using the computing resources, and run microservices, big data, training tasks, and the like by using the container.

The shortcomings of the above solution are outcomes of practices and careful studies conducted by the inventors. Therefore, the process of discovering the above problems and the solutions proposed below in the present disclosure for the above problems should be regarded as contributions of the inventors to the present disclosure.

It should be noted that similar reference signs and letters represent similar items in the drawings below. Therefore, once an item is defined in one drawing, it does not need to be further defined and described in subsequent drawings.

The resource scheduling method of the present disclosure will be described in detail below in conjunction with specific embodiments.

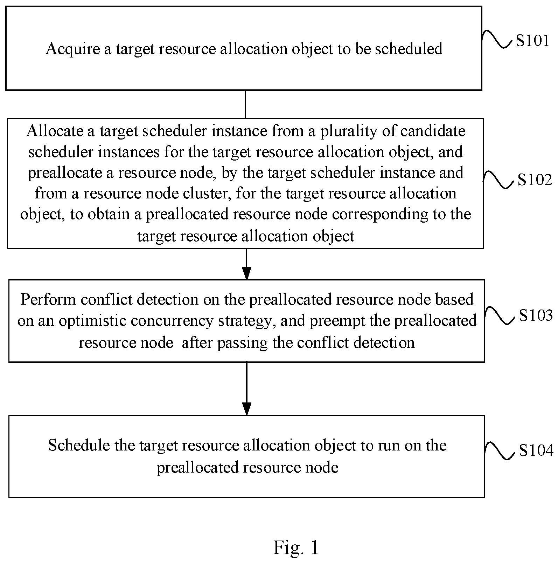

Referring to Fig. 1, which illustrates a flowchart of a resource scheduling method provided by an embodiment of the present disclosure. The resource scheduling method of this embodiment may be applied to a resource scheduling system. The resource scheduling system may be deployed in an electronic device such as a server, wherein the server may be one server or a server cluster, or may be a cloud server, etc. The resource scheduling method includes the steps as follows.

At S101, a target resource allocation object to be scheduled is acquired.

In this embodiment, the target resource allocation object to be scheduled is an object that needs to be allocated with a resource, e.g., instances (or processes) such as microservices, big data, and training tasks. In this embodiment, in order for unified scheduling of resources in different orchestration and scheduling systems, initial resource allocation objects in different orchestration and scheduling systems may be mapped (converted) to target resource allocation objects in this embodiment by means of object reference, such as Pod of Kubernetes and Container of Yarn.

Optionally, an application programming interface (API) server, APIServer, may be configured in this embodiment, which may be configured to acquire the target resource allocation object to be scheduled. Further, the resource scheduling system in this embodiment may acquire the target resource allocation object to be scheduled from APIServer by means of list-watch. Moreover, the resource scheduling system may also obtain resource node cluster state information change and target resource allocation object state information change (application change) events from APIServer by means of list-watch. Optionally, communication between components in the resource scheduling system in this embodiment may be driven by events. For example, communication between the components in the resource scheduling system with respect to an intermediate state change of the target resource allocation object is driven by an event. Each component sends the intermediate state change of the target resource allocation object in the form of an event to other components, and meanwhile, is responsible for receiving events from other components.

At S102, a target scheduler instance is allocated from a plurality of candidate scheduler instances for the target resource allocation object, and a resource node is pre-allocated, by the target scheduler instance and from a resource node cluster, for the target resource allocation object, to obtain a pre-allocated resource node corresponding to the target resource allocation object.

In this embodiment, a plurality of scheduler instances may be configured in the resource scheduling system. The scheduler instances can concurrently allocate resource nodes for resource allocation objects. For the target resource allocation object, some or all scheduler instances of the plurality of scheduler instances may serve as candidate scheduler instances. A scheduler instance may be allocated, from the candidate scheduler instances, for the target resource allocation object as the target scheduler instance. A resource node is pre-allocated, by the target scheduler instance, for the target resource allocation object, i.e., a suitable resource node is selected as the pre-allocated resource node for the target resource allocation object from the resource node cluster. The resource node cluster includes a plurality of resource nodes, i.e., a cluster constituted by resource nodes.

A preset scheduler instance allocation strategy may be employed to allocate, from the plurality of candidate scheduler instances, the target scheduler instance for the target resource allocation object. The target scheduler instance may be allocated according to state information of the candidate scheduler instances and/or related information of the target resource allocation object. For example, strategies such as load balancing may be employed to allocate the target scheduler instance.

A preset resource node pre-allocation strategy may be employed to pre-allocate, by the target scheduler instance and from the resource node cluster, a resource node for the target resource allocation object. For example, a filter and a score may be included. Firstly, candidate resource nodes are selected by filtering based on state information of resource nodes and/or state information of target resource allocation object, and then scores of the candidate resource nodes are determined. The resource node having the highest score is determined as the pre-allocated resource node corresponding to the target resource allocation object. As a matter of course, other resource node pre-allocation strategies may also be employed, which will not be defined here. A mechanism of plugin may be employed to implement various resource node pre-allocation strategies. A plugin may be configured as required, which is convenient for expansion.

It needs to be noted that pre-allocating, by the target scheduler instance and from the resource node cluster, a resource node for the target resource allocation object does not mean that the pre-allocated resource node is really allocated to the target resource allocation object. Since a plurality of scheduler instances can concurrently perform resource node pre-allocation, the same pre-allocated resource node might be allocated to different resource allocation objects. Therefore, S103 needs to be performed.

At S103, conflict detection is performed on the pre-allocated resource node based on an optimistic concurrency strategy, and the pre-allocated resource node is preempted after passing the conflict detection.

In this embodiment, the target scheduler instance pre-allocates the pre-allocated resource node to the target resource allocation object, but it is not known at this time whether the pre-allocated resource node has also been allocated to other resource allocation objects, i.e., the resource node pre-allocation is actually performed using the optimistic concurrency strategy (optimistic concurrency locking) between pre-allocated resource nodes. Therefore, the conflict detection needs to be performed on the pre-allocated resource node based on the optimistic concurrency strategy. That is, based on concurrency conflict checking based on optimistic concurrency locking, whether the pre-allocated resource node has also been allocated to other resource allocation objects is determined. If it is determined that the pre-allocated resource node has not been allocated to other resource allocation objects (not preempted by other resource allocation objects), it passes the conflict detection, and the pre-allocated resource node may be preempted. That is, the pre-allocated resource node will not be allocated to other resource allocation object.

At S104, the target resource allocation object is scheduled to run on the pre-allocated resource node.

In this embodiment, the target resource allocation object is bound to the pre-allocated resource node, and the target resource allocation object is run on the pre-allocated resource node. The specific process may be implemented using the existing known method, which will not be described here redundantly. Binding the target resource allocation object to the pre-allocated resource node includes a preparation operation before binding and a binding operation, wherein the preparation operation before binding includes creating a storage volume, and the like.

Moreover, if it is failed to pass the conflict detection, the pre-allocation of the resource node may be re-performed, by the target scheduler instance and from the resource node cluster, for the target resource allocation object.

If the pre-allocated resource node fails to be preempted, the conflict detection may be re-performed on the pre-allocated resource node again. If it fails to pass the conflict detection, the pre-allocated resource node is preempted again. If it fails to pass the conflict detection, the pre-allocation of resource node may be re-performed, by the target scheduler instance and from the resource node cluster, for the target resource allocation object.

According to the resource scheduling method provided by this embodiment, the target resource allocation object to be scheduled is acquired the target scheduler instance is allocated from the plurality of candidate scheduler instances for the target resource allocation object, and a resource node is pre-allocated, by the target scheduler instance and from the resource node cluster, for the target resource allocation object, to obtain the pre-allocated resource node corresponding to the target resource allocation object. Conflict detection is performed on the pre-allocated resource node based on the optimistic concurrency strategy, and the pre-allocated resource node is preempted after passing the conflict detection. The target resource allocation object is scheduled to run on the pre-allocated resource node. By allocating the scheduler instance for the target resource allocation object, pre-allocating a resource node first by the scheduler instance, and finally determining the resource node using conflict detection based on the optimistic concurrency strategy, concurrent scheduling of a plurality of schedulers can be realized, and a throughput in a scheduling process can be increased. Moreover, the target resource allocation objects may be various types of task instances such as any microservices, big data, and training tasks, or may be derived from different orchestration and scheduling systems (such as Kubernetes and Yarn). The compatibility with the orchestration and scheduling systems can be realized, and expansion can be achieved easily.

On the basis of any embodiment described above, the resource node cluster may be divided into a plurality of resource node subsets according to a number of the plurality of candidate scheduler instances. Each resource node subset includes one or more resource nodes in the resource node cluster (each resource node can only belong to one resource node subset), wherein each resource node subset corresponds to one candidate scheduler instance. A dividing strategy may be a strategy such as equal allocation, or topology (topology such as rack, or region) allocation based on a resource node. Moreover, a number of resource node subsets of the resource node subsets may be dynamically adjusted, for example, according to state information of the resource node subsets.

Each candidate scheduler instance may pre-allocate, from the respective resource node subset, a resource node for the target resource allocation object. As a matter of course, in some cases, a resource node may be pre-allocated, from the entire resource node cluster or from other resource node subsets, rather than only from the respective resource node subset, for the target resource allocation object.

On the basis of the above embodiments, pre-allocating, by the target scheduler instance and from the resource node cluster, a resource node for the target resource allocation object at S 102 may include: determining a pre-allocation mode of the target resource allocation object according to a usage rate of the resource node cluster and/or a conflict rate in a conflict detection process, and pre-allocating, by the target scheduler instance and using the pre-allocation mode, a resource node for the target resource allocation object.

In this embodiment, the different pre-allocation modes may be configured for resource node pre-allocation. The pre-allocation modes include a global pre-allocation mode based on the entire resource node cluster. That is, the target scheduler instance may pre-allocate, from the entire resource node cluster, rather than only from the corresponding resource node subset, a resource node for the target resource allocation object, i.e., pre-allocation is performed from the global perspective of the resource node cluster. The pre-allocation modes may further include a local pre-allocation mode based on the resource node subset corresponding to the target scheduler instance, in which the target scheduler instance may pre-allocate, from the corresponding resource node subset, a resource node for the target resource allocation object. As a matter of course, it may not be limited to pre-allocate, from the corresponding resource node subset, a resource node for the target resource allocation object. For example, the target scheduler instance prefers to pre-allocate, from the corresponding resource node subset, a resource node for the target resource allocation object. If a suitable pre-allocated resource node cannot be allocated, a resource node is pre-allocated, from resource node subsets corresponding to other scheduler instances, for the target resource allocation object, without allocating the target resource allocation object to other scheduler instances for resource node pre-allocation. The complexity and the state flow overhead are reduced.

The local pre-allocation mode based on the resource node subset corresponding to the target scheduler instance may help buffer a concurrency conflict, but may affect the scheduling quality in some cases. For example, although an allocable resource node is present in the resource node subset corresponding to the target scheduler instance, that resource node is not the optimal resource node for the target resource allocation object. Therefore, the pre-allocation mode may be switched. The switching of the pre-allocation mode is to achieve a balance between buffering a concurrency conflict and improving the scheduling quality. Accordingly, the pre-allocation mode for the target resource allocation object may be determined according to the usage rate of the resource node cluster and/or the conflict rate in the conflict detection process, and then a resource node is pre-allocated in the suitable pre-allocation mode.

If the usage rate of the resource node cluster is lower than a preset usage rate threshold, and/or the conflict rate in the conflict detection process is lower than a preset conflict rate threshold, it indicates that the remaining resources of the resource node cluster are sufficient with fewer concurrency conflicts. At this time, the global pre-allocation mode based on the entire resource node cluster may be used, and completely optimistic concurrent scheduling may be adopted to improve the scheduling quality. If the usage rate of the resource node cluster is not lower than the preset usage rate threshold, and/or the conflict rate in the conflict detection process is lower than the preset conflict rate threshold, it indicates that the remaining resources of the resource node cluster are insufficient with many concurrency conflicts. At this time, the local pre-allocation mode based on the resource node subset corresponding to the target scheduler instance may be used to buffer the concurrency conflicts.

On the basis of the above embodiments, pre-allocating, by the target scheduler instance and using the pre-allocation mode, a resource node for the target resource allocation object includes: filtering and scoring, by the target scheduler instance and from the entire resource node cluster corresponding to the pre-allocation mode or the resource node subset corresponding to the target scheduler instance, resource nodes based on state information of the resource nodes and/or state information of the target resource allocation object, and determining a resource node having a highest score as the pre-allocated resource node corresponding to the target resource allocation object.

In this embodiment, when the global pre-allocation mode based on the entire resource node cluster is used, the target scheduler instance may filter and score the resource nodes of the entire resource node cluster, and determine the resource node having the highest score as the pre-allocated resource node corresponding to the target resource allocation object. As a matter of course, other allocation manners may also be used. When the local pre-allocation mode based on the resource node subset corresponding to the target scheduler instance is used, the target scheduler instance may filter and score the resource nodes of the corresponding resource node subset, and determine the resource node having the highest score as the pre-allocated resource node corresponding to the target resource allocation object. As a matter of course, other allocation manners may also be used.

Optionally, when the local pre-allocation mode based on the resource node subset corresponding to the target scheduler instance is used, if the score of the resource node having the highest score is lower than the preset score threshold, it indicates that the resource node is not suitable for being pre-allocated to the target resource allocation object, and the target scheduler instance may switch the pre-allocation mode, or may filter and score the resource nodes of the resource node subsets corresponding to one or more other scheduler instances (e.g., adjacent other scheduler instances, or other scheduler instances with the lowest usage rate of the resource node cluster), and determine the resource node having the highest score as the pre-allocated resource node corresponding to the target resource allocation object.

On the basis of any embodiment described above, acquiring the target resource allocation object to be scheduled in S 101 may include: acquiring at least one resource allocation object set, wherein any resource allocation object set includes a plurality of target resource allocation objects to be scheduled.

In this embodiment, the plurality of target resource allocation objects may be divided into at least one resource allocation object set such that batch resource scheduling is enabled, wherein a plurality of target resource allocation objects in the same resource allocation object set belong to a same process or belong to concurrent associated processes (e.g., gang scheduling, and associated processes desired to be concurrent are started simultaneously), or are configured with same identification information (i.e., the division of the resource allocation object sets is based on the identification information).

Optionally, the interface server may directly transmit at least one resource allocation object set to the resource scheduling system, or the resource scheduling system may acquire a plurality of target resource allocation objects to be scheduled from the interface server, and then group the plurality of target resource allocation objects to obtain at least one resource allocation object set.

Further, when allocating, from the plurality of candidate scheduler instances, the target scheduler instance for the target resource allocation object at S102, one target scheduler instance may be allocated, from the plurality of candidate scheduler instances, for any resource allocation object set. That is, the plurality of target resource allocation objects in the same resource allocation object set are handled by one target scheduler instance, and a batch allocation scheduler instance is realized. When pre-allocating a resource node, the target scheduler instance may pre-allocate resource nodes for the plurality of target resource allocation objects in the resource allocation object set, respectively. Specifically, when the global pre-allocation mode based on the entire resource node cluster is used, the target scheduler instance may pre-allocate resource nodes for the plurality of target resource allocation objects in the resource allocation object set based on the entire resource node cluster, respectively. When the local pre-allocation mode based on the resource node subset corresponding to the target scheduler instance is used, the target scheduler instance may pre-allocate resource nodes for the plurality of target resource allocation objects in the resource allocation object set based on the corresponding resource node subset, respectively. Details may be as shown in the above embodiments, which will not be repeated here.

Optionally, in the above embodiments, since the resource allocation object set includes the plurality of target resource allocation objects, the number of the target resource allocation objects included in the resource allocation object set may be determined by a check procedure. In some particular cases, if there are a small number of target resource allocation objects, allocation of the target scheduler instance may be rejected. For example, for a plurality of target resource allocation objects requiring Gang, the allocation of the target scheduler instance can be continued only after all the target resource allocation objects are acquired in a specified time to constitute the resource allocation object set.

In specific implementation, allocating, from the plurality of candidate scheduler instances, a target scheduler instance for any resource allocation object set includes: if a number of the target resource allocation objects included in any resource allocation object set in a preset time is not less than a preset number, allocating, from the plurality of candidate scheduler instances, a target scheduler instance for the resource allocation object set; or if the number of the target resource allocation objects included in any resource allocation object set in the preset time is less than the preset number, determining to skip allocating a target scheduler instance for the resource allocation object set, i.e., not performing allocating a target scheduler instance for the resource allocation object set.

On the basis of any embodiment described above, since a plurality of target resource allocation objects to be scheduled may be acquired, in order to relieve the pressure of the subsequent process, after the target resource allocation objects to be scheduled are acquired, the target resource allocation objects may be added to a first queue, and then the target resource allocation objects wait in the first queue. Further, a first preset strategy may be used to fetch a target resource allocation object from the first queue, and a target scheduler instance is allocated, from a plurality of candidate scheduler instance, for the fetched target resource allocation object.

If the plurality of target resource allocation objects belong to the same resource allocation object set, the resource allocation object set is fetched from the first queue, and the target scheduler instances are allocated, from the plurality of candidate scheduler instance, for the fetched resource allocation object set.

The first preset strategy may include, but be not limited to, a dominant resource fairness (DRF) strategy, a strategy based on priority, a FairShare strategy, and first in first out (FIFO) strategy, and the like.

Moreover, before the target resource allocation object is added to the first queue or the target resource allocation object is fetched from the first queue, the target resource allocation object may also be checked. For example, the state information of the target resource allocation object is checked and maintained for correcting an error state, leak filling, and the like. Moreover, the solution of continuing with the allocation of the target scheduler instance only after all the target resource allocation objects are acquired in the specific time to constitute the resource allocation object set in the above embodiment is also implemented by checking before the resource allocation object set is fetched from the first queue.

On the basis of any embodiment described above, the target scheduler instance might be allocated with a plurality of target resource allocation object, e.g., allocated with a resource allocation object set. Therefore, pre-allocating, by the target scheduler instance and from the resource node cluster, a resource node for the target resource allocation object may specifically include: adding one or more target resource allocation objects allocated to the target scheduler instance to a second queue; and fetching, by the target scheduler instance, a target resource allocation object from the second queue using a second preset strategy, and pre-allocating a resource node for the fetched target resource allocation object.

In this embodiment, the target scheduler instance may add one or more target resource allocation objects allocated thereto to the second queue, and then the second preset strategy may be used to fetch a target resource allocation object from the second queue for resource node pre-allocation. The second preset strategy may be the strategy based on priority, wherein the priority of each target resource allocation object may be preconfigured, or may be determined by the target scheduler instance according to the target resource allocation information, or otherwise determined, which will not be defined here. Further, the second queue may be ranked based on priority, and the target scheduler instance fetches the target resource allocation object from the second queue according to the priority.

Optionally, the priority may also be adjusted according to a number of scheduling failures or a number of retries of the target resource allocation object. In order to prevent a task with a low priority from being not responded, in addition to a retry mechanism, some penalty measures may also be added. For example, the more the scheduling (pre-allocation) failures, the higher the penalty weight, and the lower the priority.

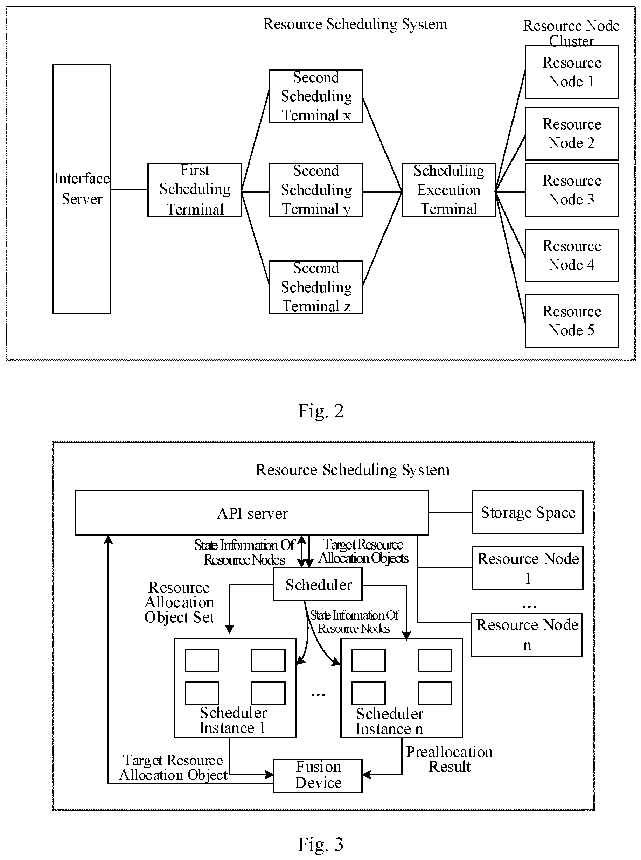

With reference to Fig. 2, there is shown a schematic diagram of a resource scheduling system provided by an embodiment of the present disclosure. The resource scheduling system includes an interface server, a first scheduling terminal, a plurality of second scheduling terminals, a scheduling execution terminal, and a resource node cluster.

The interface server is configured to acquire a target resource allocation object to be scheduled, and may be in communication connection with at least one client.

The first scheduling terminal configured to allocate, from a plurality of candidate second scheduling terminals, a target second scheduling terminal for the target resource allocation object.

The second scheduling terminal configured to pre-allocate, from the resource node cluster, a resource node for the target resource allocation object, to obtain a pre-allocated resource node corresponding to the target resource allocation object.

The scheduling execution terminal configured to perform conflict detection on the pre-allocated resource node based on an optimistic concurrency strategy, and preempt the pre-allocated resource node after passing the conflict detection, and schedule the target resource allocation object to run on the pre-allocated resource node.

The resource scheduling system may be deployed on a cloud server and configured to request a deployed service for a client, i.e., allocate a resource node for a target resource allocation object to be scheduled. The cloud server may be a distributed server. A resource node may be a computing node in the cloud server. Computing resources such as a processor, a memory, a readable storage medium, and a graphics processing unit are deployed on the resource node. The resource node can establish a container using the computing resources, and run the target resource allocation object by using the container.

The first scheduling terminal, the second scheduling terminal, and the scheduling execution terminal may be deployed on a computing module in a same computer device and run by different processes, or may be deployed on different computer devices.

A user may request, by means of a client, to deploy a target resource allocation object such as a microservice on a resource node. The client may send a deployment request to the first scheduling terminal through the interface server. The deployment request may carry the target resource allocation object to be scheduled, and related information of the target resource allocation object. After receiving the deployment request, the first scheduling terminal may allocate the second scheduling terminal for the target resource allocation object to be scheduled, and then the second scheduling terminal pre-allocate a resource node for the target resource allocation object. Subsequently, the scheduling execution terminal performs conflict detection on the pre-allocated resource node based on an optimistic concurrency strategy. After passing the conflict detection, the pre-allocated resource node is preempted. The target resource allocation object is scheduled to run on the pre-allocated resource node.

The second scheduling terminal may acquire the state information of the resource nodes in real time, or may acquire event information of the resource nodes in real time, such as related information of a service deployment event, a resource occupying event, and a resource release event, and locally maintain the state information of the resource node according to the event information of the resource nodes. The state information of the resource nodes may include resource state information of the resource nodes, such as occupation of various types of resources.

The state information or event information of the resource nodes may be directly acquired from the resource nodes, or the state information or event information may also be maintained by the interface server. The interface server may provide a plurality of API interfaces. When the resource nodes change, events may be produced, and the generated event information may be sent to the interface server through the API interfaces. The interface server may store the event information and send the event information to the second scheduling terminals and/or the scheduling execution terminal.

The interface server may be APIServer, and is one of native components of a container orchestration application (Kubernetes).

The interface server may not only acquire information sent by the second scheduling terminals, but also acquire information sent by other terminal devices in the resource scheduling system, such as event information from the first scheduling terminal and the scheduling execution terminal.

In this way, the first scheduling terminal, the second scheduling terminals, the scheduling execution terminal, and the resource nodes may not interact directly with one another, and instead may interact by means of events, and information is transferred by the interface server by list-watch.

Since the second scheduling terminals concurrently allocate service deployment requests, the state information of the resource nodes used in allocation are consistent, and the second scheduling terminals do not interfere with and affect each other when allocating the service deployment requests (which may share allocation results with each other after the completion of allocation). There may be an allocation conflict. For example, two target resource allocation objects are allocated to the same resource node, but the resources on the resource nodes are not enough to simultaneously meet the requirements of the two target resource allocation objects.

Therefore, in the embodiments of the present disclosure, by the scheduling execution terminal and using the current state information of the resource nodes, whether the pre-allocated resource node has enough resources for allocation to the target resource allocation object by performing conflict detection on the pre-allocated resource node based on the optimistic concurrency strategy. Meanwhile, the scheduling execution terminal may also use some preset rules to filter the resource nodes using other attribute information of the resource nodes, thereby meeting the requirement of filtering more resource nodes.

In a specific implementation, after passing the conflict detection performed by the scheduling execution terminal on one pre-allocated resource node, the pre-allocated resource node may be preempted. The target resource allocation object is scheduled to run on the pre-allocated resource node. Moreover, the state information of the resource node may also be updated. In this way, the scheduling execution terminal may acquire the updated state information, and perform the conflict detection on the new pre-allocated resource node using the updated state information, thereby preventing an allocation conflict.

In a possible implementation, when preempting the pre-allocated resource node, the scheduling execution terminal may first add the information of the target resource allocation object to the resource node state information stored thereon. The information of the target resource allocation object may be used to avoid an allocation conflict due to the update latency of the resource node information.

The scheduling execution terminal may cache the state information of the resource nodes. After passing the conflict detection on the pre-allocated resource node, the scheduling execution terminal may also store allocation information (e.g., a mapping relationship between the target resource allocation object and the resource node) to a cache. At this time, the stored allocation information does not really represent that the target resource allocation object runs on the resource node. When the target resource allocation object is successfully deployed on the resource node, the resource node may generate event information. The scheduling execution terminal may update the cache according to the event information of the resource node. Thus, the temporarily stored allocation information is stored as reliable information, or the allocation information is deleted due to unsuccessful deployment.

When it fails to pass the conflict detection on the pre-allocated resource node, the scheduling execution terminal may send a reallocation instruction to the corresponding second scheduling terminal. Upon receiving the reallocation instruction, the second scheduling terminal may re-perform the pre-allocation of resource node for the target resource allocation object again based on the currently stored state information. Since the second scheduling terminal has acquired the latest state information of the resource node, pre-allocation may be re-performed according to the updated state information.

In a possible implementation, when pre-allocating a resource node for the target resource allocation object based on the currently stored state information, the second scheduling terminal may determine a target allocation manner from a plurality of service allocation manners based on target type information of the target resource allocation object, and determine allocation scores corresponding to resource nodes based on the target allocation manner and the state information, and then pre-allocate a resource node for the target resource allocation object based on the allocation scores corresponding to the resource nodes.

Before scoring the resource nodes, the resource nodes may be filtered first to select resource nodes meeting the requirement of the target allocation manner, and then the selected resource nodes are scored.

The target resource allocation object may include a plurality of types, such as a query type and a payment type. Different types may correspond to different allocation manners, such as priority allocation and centralized allocation.

The resource nodes may be scored to obtain allocation scores thereof according to the target allocation manner and the state information of the resource nodes. The allocation score may represent an extent to which the resource node is suitable for the target resource allocation object. A resource node may be pre-allocated for the target resource allocation object based on the allocation scores.

Before the pre-allocation of the resource node, the second scheduling terminal may also determine priority information of the target resource allocation object based on the target type information corresponding to the target resource allocation object and/or the number of scheduling failures of the target resource allocation object, and add the target resource allocation object to a second queue based on the priority information. The target resource allocation objects in the second queue may be pre-allocated with resource nodes in accordance with priorities.

Different priority information may correspond to different second queues, or correspond to different positions in the second queue. When the target resource allocation objects in the second queue are consumed, they may be consumed according to a consumption order of the second queue.

In a possible implementation, the first scheduling terminal may also acquire at least one resource allocation object set. The resource allocation object set include a plurality of target resource allocation objects to be scheduled. Alternatively, the first scheduling terminal may also group the acquired plurality of target resource allocation objects to obtain at least one resource allocation object set.

In the above implementation, a plurality of target resource allocation objects in the same resource allocation object set belong to a same process or belong to concurrent associated processes (e.g., Gang scheduling, associated processes desired to be concurrent are started simultaneously), or are configured with same identification information (i.e., the division of the resource allocation object sets is based on the identification information).

Exemplarily, for any target resource allocation object, the first scheduling terminal may determine whether the target resource allocation object belongs to a certain resource allocation object set. If yes, the target resource allocation object may be added to the resource allocation object set.

In this way, the resource allocation object set may be allocated to the same second scheduling terminal for centralized allocation.

Optionally, for a certain resource allocation object set, if the number of the target resource allocation objects included in the resource allocation object set in a preset time is not less than a preset number, one second scheduling terminal may be allocated for the resource allocation object set. Alternatively, if the number of the target resource allocation objects included in any resource allocation object set in the preset time is less than the preset number, it is determined to skip allocating a second scheduling terminal for the resource allocation object set, i.e., not performing allocating a second scheduling terminal for the resource allocation object set.

When the second scheduling terminal pre-allocates a resource node for the target resource allocation object based on the current state information of the resource nodes, if pre-allocation is failed, the priority information corresponding to the target resource allocation object may be determined, and the target resource allocation object may be preempted for allocation according to the priority information and the priority information of resource allocation objects that have been deployed on the resource nodes. The resource allocation object having a lower priority is disabled, and a resource node is allocated for the target resource allocation object having a higher responding priority.

In preempted allocation, for a list of resource nodes to be preempted, a resource allocation object to be preempted may be determined from resource allocation objects that have been deployed on each resource node to be preempted. Furthermore, the most suitable resource node to be preempted and the corresponding resource allocation object to be preempted are selected from the list of resource nodes to be preempted and the corresponding resource allocation objects to be preempted, and sent to the scheduling execution terminal. The scheduling execution terminal deletes the resource allocation object to be preempted from the resource nodes to be preempted, and deploys the target resource allocation object to the resource node to be preempted.

The embodiments of the present disclosure may be adapted to different resource scheduling architectures. The service deployment requests of different resource architectures may have different data structures. Before the first scheduling terminal allocates the second scheduling terminal for the target resource allocation object, the target resource allocation object may be converted to the target resource allocation object of a standard data structure so that it can be adapted to different resource scheduling architectures.

In this way, when the first scheduling terminal allocates the second scheduling terminal for the target resource allocation object, the second scheduling terminal may be directly allocated to the target resource allocation object of the standard structure.

Moreover, when binding each target resource allocation object in the resource allocation object set to the corresponding pre-allocated resource node, a minimum number threshold may also be considered. That is, binding can be performed, i.e., scheduling is successful, only when the number of the target resource allocation objects in the resource allocation object set that can be bound to the corresponding pre-allocated resource nodes reaches the minimum number threshold. It can be ensured that the target resource allocation object in the resource allocation object set can be successfully scheduled at the same time to support Gang semantics.

With reference to Fig. 3, there is shown another resource scheduling system provided by an embodiment of the present disclosure. The resource scheduling system may include an API server, a scheduler, a scheduler instance (a scheduler program), a fusion device, and a storage space.

The scheduler is mainly responsible for acquiring target resource allocation objects to be scheduled from the API server. The scheduler can check, convert (a target resource allocation object sent by a client is converted to a target resource allocation object of a standard data structure, and target resource allocation objects may be grouped to obtain a resource allocation object set), and queue the target resource allocation objects to be scheduled, and then distribute them to different scheduler instances. Meanwhile, the scheduler is also responsible for partitioning a resource node cluster based on the number of scheduler instances, facilitating the subsequent steps of the scheduler instances.

The scheduler may be composed of the following several parts: a check module, a queuing module, a grouping module, a maintenance module, an inspection module, and a distribution module.

The check module may check the target resource allocation objects to be scheduled, and perform operations such as rejection, waiting, release, and conversion based on a checking result. For example, it may be required to perform the waiting operation on a target resource allocation object arriving in advance before all or part of target resource allocation objects belong to a same service group arrive. The target resource allocation object is released if it meets the requirement in a specified time. If the time expires, the target resource allocation object is directly rejected. Thus, the pressure of the scheduler instances and the fusion device can be reduced.

The queuing module may be responsible for queuing the target resource allocation objects, and may be configured with different strategies.

The grouping module may be responsible for grouping the resource node cluster based on the number of the scheduler instances. Each scheduler instance may correspond to one resource node subset. Each resource node can only be allocated in one resource node subset. If addition or deletion is made to the target resource allocation objects or the number of the scheduler instances changes, a resource node may be reallocated based on an actual situation.

The maintenance module is responsible for maintaining instance states of the scheduler instances, including health statuses of the scheduler instances, loads, the number of resource nodes in a group, etc.

The inspection module may periodically inspect the states of objects such as the target resource allocation objects, the resource nodes, and the scheduler instances, correct error states, and perform leak filling.

The distribution module may distribute different target resource allocation objects to different scheduler instances, and may be configured with different allocation strategies, such as equal distribution according to the loads of the scheduler instances.

The scheduler instance is mainly responsible for making specific scheduling and preempting strategies, but does not really perform scheduling and preempting (the real executor is the fusion device). A main body frame of the scheduler instance may include a priority module, a caching module, and a pre-allocation module.

The priority module is configured to store service group deployment information sent by a scheduler, and rank service target resource allocation objects based on priority. In order to prevent a task with a low priority from being not responded, in addition to a backoff retry mechanism, some penalty measures may also be added. For example, the more the scheduling (pre-allocation) failures, the higher the penalty weight, and the lower the priority. Meanwhile, in order to guarantee that a scheduling possibility caused by the update of a cluster state can be responded in time in a backoff state, there is a corresponding queue refresh mechanism for immediately triggering the scheduling attempt of the target resource allocation object backed off.

The caching module may cache the state information of the resource nodes to speed up the scheduling process.

The pre-allocation module may perform filtering and allocation operations, and can traverse the resource nodes. The range of traversing the resource nodes may cover all the resource nodes, or might cover the resource nodes in the group corresponding to the current scheduler instance, which may be specifically decided based on a current scheduling mode. The suitable resource node is found before entering an allocation stage, and the most suitable resource node is selected. If there is no suitable resource node in the current group, attempts may be made in other groups. If there is no suitable resource node in the entire cluster, a preempting determination process may be initiated to preempt resources of other services.

The fusion device may be responsible for conflict detection, and can perform a specific preempting operation (deleting a preempted service), perform preparation before the binding of the target resource allocation object, e.g., dynamic creation of a storage volume and the like, and finally perform the binding operation. The fusion device may include a conflict detection module, a preempting module, and a binding module.

The conflict detection module may be configured for concurrency conflict detection, and configured to detect whether a pre-allocation result of concurrent allocation can be performed normally, and when a conflict occurs, return the target resource allocation object to the scheduler instance for rescheduling.

The preempting module, when needing for preempting, may perform the preempting operation and delete the preempted resource allocation object.

The binding module may be responsible for preparation for service binding and the binding operation.

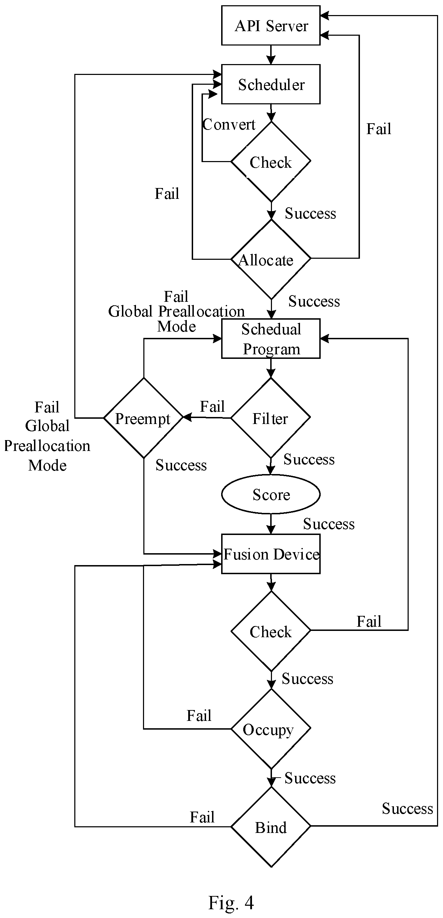

With reference to Fig. 4, there is shown a flowchart of service allocation provided by an embodiment of the present disclosure. A scheduler may acquire a target resource allocation object to be allocated with a resource node from the API server, and checks the target resource allocation object using the check module. If the checking is failed, event information of failed checking is sent to the API server. If the checking is successful, scheduling is performed and the target resource allocation object is allocated to a scheduler instance. If the target resource allocation object is not of the standard data structure, it is converted to the standard data structure before being checked. If allocation to the scheduler instance is failed, queuing and checking are re-performed.

Subsequently, the scheduler instance may filter the resource nodes and score the resource nodes obtained by filtering. In the filtering process, resource nodes meeting an allocation condition may be selected. If it is failed to successfully select a suitable resource node, a preempting process may be initiated, and part or all of desired preempting results may be sent to the scheduler instance.

If preempting is failed, reallocation may be performed by the scheduler instance. When preempting is failed, if in the local pre-allocation mode based on the resource node subset corresponding to the target scheduler instance, a resource node may be reselected by the scheduler instance from the corresponding resource node subset. If in the global pre-allocation mode based on the entire resource node cluster, the target resource allocation object may be returned to the scheduler, and the scheduler instance is reallocated by the scheduler to perform scheduling and allocation for the target resource allocation object from the entire resource node cluster or resource node subsets corresponding to other scheduler instances.

When preempting is successful or pre-allocation is successful, a preempting result or a pre-allocation result may be sent to the fusion device, and the fusion device checks the resource node in the preempting result or the pre-allocation result (by conflict detection based on the optimistic concurrency strategy). If the checking is failed, the target resource allocation object is returned to the scheduler instance, and the resource node is reallocated. If the checking is successful, the corresponding resource node is preempted. After the preempting is successful, the target resource allocation object is bound to the resource node. If the preempting is failed or the binding is failed, the fusion device checks the preempting result or the pre-allocation result again. If the binding is successful, event information of successful binding is sent to the API server.

The resource scheduling method and device provided in the above embodiments of the present disclosure have the effects as follows.
1) Rich functions. Some scheduling functions, such as resource matching, affinity inspection, and microtopology scheduling, may be realized based on Kubernetes scheduling framework. Meanwhile, the abstract definition of the resource allocation object set (including a plurality of target resource allocation objects) is added. On this basis, advanced functions such as Gang scheduling and application level affinity are realized. Therefore, unified scheduling of various types of tasks such as microservices, big data, and training can be supported.
2) Good performance. In the scheduling process, since the inspection on matching between a task (the target resource allocation object) and a resource node is most time-consuming, an optimistic concurrency architecture is used. A plurality of scheduler instances work simultaneously. Meanwhile, within each scheduler instance, concurrent scheduling is also realized for different types of tasks (not influencing each other). Meanwhile, numerous optimizations are made to Kubernetes native scheduling framework to increase a throughput. The throughput may be up to 5k+ pods/s.
3) Ease of expansion. Scheduling may be divided into several stages. New functions may be added by means of plugin at each stage, and easy expansion is realized. By abstracting the resource allocation object set, the target resource allocation objects may be organized very flexibly to provide the batch scheduling capability. The expandability is further enhanced.

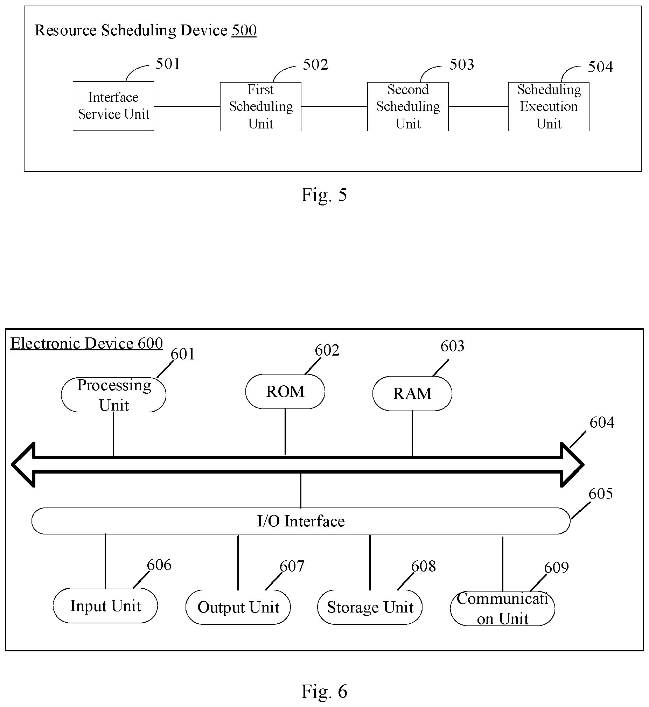

Corresponding to the resource scheduling method of the above embodiments, Fig. 5 is a structural block diagram of a resource scheduling device provided by an embodiment of the present disclosure. For ease of description, only the parts related to this embodiment of the present disclosure are illustrated. With reference to Fig. 5, the resource scheduling device 500 includes an interface service unit 501, a first scheduling unit 502, a second scheduling unit 503, and a scheduling execution unit 504.

The interface service unit 501 is configured to acquire a target resource allocation object to be scheduled.

The first scheduling unit 502 is configured to allocate, from a plurality of candidate scheduler instances, a target scheduler instance for the target resource allocation object.

The second scheduling unit 503 is configured to pre-allocate, by the target scheduler instance and from a resource node cluster, a resource node for the target resource allocation object, to obtain a pre-allocated resource node corresponding to the target resource allocation object.

The scheduling execution unit 504 is configured to perform conflict detection on the pre-allocated resource node based on an optimistic concurrency strategy, and preempt the pre-allocated resource node after passing the conflict detection, and schedule the target resource allocation object to run on the pre-allocated resource node.

In one or more embodiments of the present disclosure, the second scheduling unit 503, when pre-allocating, by the target scheduler instance and from the resource node cluster, a resource node for the target resource allocation object, is configured to determine a pre-allocation mode of the target resource allocation object according to a usage rate of the resource node cluster and/or a conflict rate in a conflict detection process, and pre-allocate, by the target scheduler instance and using the pre-allocation mode, a resource node for the target resource allocation object, wherein the pre-allocation mode includes a global pre-allocation mode based on the entire resource node cluster, or a local pre-allocation mode based on a resource node subset corresponding to the target scheduler instance; and the resource node subset corresponding to the target scheduler instance includes one or more resource nodes in the resource node cluster.

In one or more embodiments of the present disclosure, the second scheduling unit 503, when pre-allocating, by the target scheduler instance and using the pre-allocation mode, a resource node for the target resource allocation object, is configured to: if the pre-allocation mode is the global pre-allocation mode based on the entire resource node cluster, pre-allocate, by the target scheduler instance and from the entire resource node cluster, a resource node for the target resource allocation object; and/or, if the pre-allocation mode is the local pre-allocation mode based on the resource node subset corresponding to the target scheduler instance, pre-allocate, by the target scheduler instance and from the resource node subset corresponding to the target scheduler instance, a resource node for the target resource allocation object.

In one or more embodiments of the present disclosure, the second scheduling unit 503, when pre-allocating, by the target scheduler instance and using the pre-allocation mode, a resource node for the target resource allocation object, is configured to filter and score, by the target scheduler instance and from the entire resource node cluster corresponding to the pre-allocation mode or the resource node subset corresponding to the target scheduler instance, resource nodes based on state information of the resource nodes and/or state information of the target resource allocation object, and determine a resource node having a highest score as the pre-allocated resource node corresponding to the target resource allocation object.

In one or more embodiments of the present disclosure, the first scheduling unit 502 is further configured to: divide the resource node cluster into a plurality of resource node subsets according to a number of the plurality of candidate scheduler instances, wherein each resource node subset corresponds to one candidate scheduler instance; and/or adjust a number of resource node subsets of the resource node subsets according to state information of the resource node subsets.

In one or more embodiments of the present disclosure, the interface service unit 501, when acquiring the target resource allocation object to be scheduled, is configured to acquire at least one resource allocation object set, wherein any resource allocation object set includes a plurality of target resource allocation objects to be scheduled.

In one or more embodiments of the present disclosure, the first scheduling unit 502, when allocating, from the plurality of candidate scheduler instances, the target scheduler instance for the target resource allocation object, is configured to allocate, from the plurality of candidate scheduler instances, a target scheduler instance for any resource allocation object set.

The second scheduling unit 503, when pre-allocating, by the target scheduler instance and from the resource node subset corresponding to the target scheduler instance, a resource node for the target resource allocation object, is configured to pre-allocate, by the target scheduler instance and from the resource node subset corresponding to the target scheduler instance, resource nodes for the target resource allocation objects in the resource allocation object set.

In one or more embodiments of the present disclosure, the first scheduling unit 502 is further configured to group the plurality of target resource allocation objects to obtain at least one resource allocation object set, wherein a plurality of target resource allocation objects in the same resource allocation object set belong to a same process, or belong to concurrent associated processes, or are configured with same identification information.

In one or more embodiments of the present disclosure, the first scheduling unit 502, when allocating, from the plurality of candidate scheduler instances, a target scheduler instance for any resource allocation object set, is configured to: if a number of the target resource allocation objects included in any resource allocation object set in a preset time is not less than a preset number, allocate, from the plurality of candidate scheduler instances, a target scheduler instance for the resource allocation object set; or, if the number of the target resource allocation objects included in any resource allocation object set in the preset time is less than the preset number, determine to skip allocating a target scheduler instance for the resource allocation object set.

In one or more embodiments of the present disclosure, the first scheduling unit 502, after acquiring the target resource allocation object to be scheduled, is further configured to add the target resource allocation object to a first queue.

The first scheduling unit 502, when allocating, from the plurality of candidate scheduler instances, a target scheduler instance for the target resource allocation object is configured to fetch a target resource allocation object from the first queue using a first preset strategy, and allocate, from the plurality of candidate scheduler instances, a target scheduler instance for the fetched target resource allocation object.

In one or more embodiments of the present disclosure, the second scheduling unit 503, when pre-allocating, by the target scheduler instance and from the resource node cluster, a resource node for the target resource allocation object, is configured to: add one or more target resource allocation objects allocated to the target scheduler instance to a second queue; and fetch, by the target scheduler instance, a target resource allocation object from the second queue using a second preset strategy, and pre-allocate a resource node for the fetched target resource allocation object.

In one or more embodiments of the present disclosure, the second scheduling unit 503, when fetching, by the target scheduler instance, a target resource allocation object from the second queue using the second preset strategy, is configured to determine a priority of each target resource allocation object in the second queue, and fetch, by the target scheduler instance, a target resource allocation object from the second queue according to the priority.

In one or more embodiments of the present disclosure, the scheduling execution unit 504 is further configured to: if failing to pass the conflict detection, reperform the pre-allocation of resource node for the target resource allocation object by the target scheduler instance and from the resource node cluster; or, if failing to preempt the pre-allocated resource node, re-perform the conflict detection on the pre-allocated resource node.

A device provided in this embodiment may be used to perform the technical solutions of the method embodiments described above, and may follow similar implementation principles and have similar technical effects to the method embodiments, which will not be redundantly described herein.

With reference to Fig. 6, there is shown a structural schematic diagram of an electronic device 600 adapted to implement the embodiments of the present disclosure. The electronic device 600 may be a terminal device or a server. The terminal device may include, but be not limited to, mobile terminals such as a mobile phone, a notebook computer, a digital streaming receiver, a personal digital assistant (PDA), a portable Android device (PAD), a portable media player (PMP), and a vehicular terminal (e.g., a vehicular navigation terminal), and fixed terminals such as a digital TV and a desktop computer. The electronic device shown in Fig. 6 is merely an example, and should not pose any limitation to the functions and the range of use of the embodiments of the present disclosure.

As shown in Fig. 6, the electronic device 600 may include a processing unit (e.g., a central processing unit, or a graphics processing unit) 601, which can perform various suitable actions and processing according to a program stored on a read-only memory (ROM) 602 or a program loaded from a storage unit 608 into a random access memory (RAM) 603. The RAM 603 further stores various programs and data required for operations of the electronic device 600. The processing unit 601, the ROM 602, and the RAM 603 are interconnected by means of a bus 604. An input/output (I/O) interface 605 is also connected to the bus 604.

Usually, the following apparatuses may be connected to the I/O interface 605: an input unit 606 including, for example, a touch screen, a touch pad, a keyboard, a mouse, a camera, a microphone, an accelerometer, and a gyroscope; an output unit 607 including, for example, a liquid crystal display (LCD), a loudspeaker, and a vibrator; a storage unit 608 including, for example, a magnetic tape and a hard disk; and a communication unit 609. The communication unit 609 may allow the electronic device 600 to be in wireless or wired communication with other devices to exchange data. While Fig. 6 illustrates the electronic device 600 having various apparatuses, it is to be understood that all the illustrated apparatuses are not necessarily implemented or included. More or less apparatuses may be implemented or included alternatively.

According to the embodiments of the present disclosure, the process described above with reference to the flowchart may be implemented as a computer software program. For example, an embodiment of the present disclosure includes a computer program product including a computer program carried on a computer-readable medium. The computer program includes a program code for executing the method shown in the flowchart. In such embodiments, the computer program may be downloaded online through the communication unit 609 and installed, or installed from the storage unit 608, or installed from the ROM 602. When the computer program is executed by the processing unit 601, the functions defined in the method of the embodiments of the present disclosure are executed.

It should be noted that the computer-readable medium mentioned above in the present disclosure can be a computer-readable signal medium or a computer-readable storage medium, or any combination of the two. Computer-readable storage media may include, for example, but are not limited to, electrical, magnetic, optical, electromagnetic, infrared, or semiconductor systems, devices, or apparatuses, or any combination thereof. More specific examples of computer-readable storage media can include, but are not limited to: an electrical connection having one or more wires, portable computer disks, hard disks, random access memory (RAM), read-only memory (ROM), erasable programmable read-only memory (EPROM or flash memory), optical fibers, portable compact disk read-only memory (CD-ROM), optical storage devices, magnetic storage devices, or any suitable combination thereof. In the present disclosure, a computer-readable storage medium may be any tangible medium containing or storing a program that can be used by or in connection with an instruction execution system, apparatus, or device. In the present disclosure, a computer-readable signal medium may include a data signal propagated in a baseband or as part of a carrier wave, carrying computer-readable program code. Such propagating data signals may take many forms, including but not limited to electromagnetic signals, optical signals, or any suitable combination thereof. A computer-readable signal medium may also be any computer-readable medium other than a computer-readable storage medium that can transmit, propagate, or convey a program for use by or in connection with an instruction execution system, apparatus, or device. Program code contained on a computer-readable medium may be transmitted using any appropriate medium, including but not limited to wire, optical cable, radio frequency (RF), etc., or any suitable combination thereof.

The aforementioned computer-readable medium may be included within the aforementioned electronic device; or alternatively, the medium may exist independently and not be assembled within the electronic device.

The aforementioned computer-readable medium carries one or more programs, and when the one or more programs are executed by the electronic device, they cause the electronic device to perform the method(s) described in the aforementioned embodiments.

Computer program code for carrying out operations for aspects of the present disclosure may be written in one or more programming languages or their combinations including object-oriented programming languages such as Java, Smalltalk, C++, and conventional procedural programming languages such as the "C" programming language or similar programming languages. The program code may execute entirely on the user's computer, partly on the user's computer, as a stand-alone software package, partly on the user's computer and partly on a remote computer, or entirely on a remote computer or server. In the scenario that the remote computer is involved, the remote computer may be connected to the user's computer through any type of network, including a Local Area Network (LAN) or a Wide Area Network (WAN), or the connection may be made to an external computer (for example, through an Internet service provider to connect to the Internet).

The flowcharts and block diagrams in the drawings illustrate the architecture, functionality, and operation of possible implementations of systems, methods, and computer program products according to various embodiments of the present disclosure. In this regard, each box in the flowchart or block diagrams may represent a module, segment, or portion of code, which includes one or more executable instructions for implementing the specified logical functions. It should also be noted that, in some alternative implementations, the functions noted in the boxes might occur in an order different from those noted in the figures. For example, two boxes represented as occurring in succession may in fact be executed substantially concurrently, or the boxes might sometimes be executed in the reverse order, depending on the functionality involved. Additionally, it should be noted that every box in the block diagrams and/or flowcharts, and combinations of boxes in the block diagrams and/or flowcharts, can be implemented by special-purpose hardware-based systems that perform the specified functions or acts, or combinations of special-purpose hardware and computer instructions.

The units involved in the embodiments of the present disclosure may be implemented either through software or hardware. The name of a unit does not necessarily limit the nature of the unit itself. For instance, a "first acquisition unit" could also be described as a "unit for obtaining at least two Internet Protocol addresses."

The functions described herein may be performed, at least in part, by one or more hardware logic components. As non-limiting examples, demonstrative types of hardware logic components that may be utilized include: Field-Programmable Gate Arrays (FPGAs), Application-Specific Integrated Circuits (ASICs), Application-Specific Standard Products (ASSPs), System on a Chip (SoCs), Complex Programmable Logic Devices (CPLDs), and so forth.

In the context of the present disclosure, a machine-readable medium may be a tangible medium capable of containing or storing a program for use by or in connection with an instruction execution system, apparatus, or device. A machine-readable medium may be a machine-readable signal medium or a machine-readable storage medium. The machine-readable medium may include, but is not limited to, electronic, magnetic, optical, electromagnetic, infrared, or semiconductor systems, devices, or apparatus, or any suitable combination thereof. More specific examples of machine-readable storage media would include, but are not limited to: electrical connections having one or more wires, portable computer disks, hard drives, random access memory (RAM), read-only memory (ROM), erasable programmable read-only memory (EPROM or flash memory), optical fibers, portable compact disc read-only memory (CD-ROM), optical storage devices, magnetic storage devices, or any suitable combination thereof.

## Claims

1. A resource scheduling method, comprising:
acquiring (S101) a target resource allocation object to be scheduled;
allocating (S102), from a plurality of candidate scheduler instances, a target scheduler instance for the target resource allocation object, and pre-allocating, by the target scheduler instance and from a resource node cluster, a resource node for the target resource allocation object, to obtain a pre-allocated resource node corresponding to the target resource allocation object;
performing (S103) conflict detection on the pre-allocated resource node based on an optimistic concurrency strategy, and preempting the pre-allocated resource node after passing the conflict detection; and
scheduling (S104) the target resource allocation object to run on the pre-allocated resource node.

2. The resource scheduling method according to claim 1, wherein the pre-allocating, by the target scheduler instance and from a resource node cluster, a resource node for the target resource allocation object comprises:
determining a pre-allocation mode of the target resource allocation object according to a usage rate of the resource node cluster and/or a conflict rate during a process of the conflict detection, and pre-allocating, by the target scheduler instance and using the pre-allocation mode, a resource node for the target resource allocation object,
wherein the pre-allocation mode comprises a global pre-allocation mode based on the entire resource node cluster, or based on a local pre-allocation mode based on a resource node subset corresponding to the target scheduler instance, and
wherein the resource node subset corresponding to the target scheduler instance comprises one or more resource nodes in the resource node cluster.

3. The resource scheduling method according to claim 2, wherein the pre-allocating, by the target scheduler instance and using the pre-allocation mode, a resource node for the target resource allocation object comprises:
pre-allocating, by the target scheduler instance, a resource node for the target resource allocation object from the entire resource node cluster, when the pre-allocation mode is the global pre-allocation mode based on the entire resource node cluster; or
pre-allocating, by the target scheduler instance, a resource node for the target resource allocation object from the resource node subset corresponding to the target scheduler instance, when the pre-allocation mode is the local pre-allocation mode based on the resource node subset corresponding to the target scheduler instance.

4. The resource scheduling method according to claim 3, wherein the pre-allocating, by the target scheduler instance and using the pre-allocation mode, a resource node for the target resource allocation object comprises:
filtering and scoring, by the target scheduler instance, resource nodes from the entire resource node cluster corresponding to the pre-allocation mode or the resource node subset corresponding to the target scheduler instance, based on state information of the resource nodes and/or state information of the target resource allocation object, and determining a resource node having a highest score as the pre-allocated resource node corresponding to the target resource allocation object.

5. The resource scheduling method according to claim 2, further comprising:
dividing the resource node cluster into a plurality of resource node subsets according to a number of the plurality of candidate scheduler instances, wherein each resource node subset corresponds to one candidate scheduler instance; and/or
adjusting a number of resource node subsets of the resource node subsets according to state information of the resource node subsets.

6. The resource scheduling method according to claim 3, wherein the acquiring a target resource allocation object to be scheduled comprises:
acquiring at least one resource allocation object set, each of the at least one resource allocation object set comprising a plurality of target resource allocation objects to be scheduled.

7. The resource scheduling method according to claim 6, wherein the allocating, from a plurality of candidate scheduler instances, a target scheduler instance for the target resource allocation object comprises:
allocating, from the plurality of candidate scheduler instances, a target scheduler instance for a first resource allocation object set of the at least one resource allocation object set; and
the pre-allocating, by the target scheduler instance, a resource node for the target resource allocation object from the resource node subset corresponding to the target scheduler instance comprises:
pre-allocating, by the target scheduler instance, a respective resource node for each target resource allocation object in the first resource allocation object set from the resource node subset corresponding to the target scheduler instance.

8. The resource scheduling method according to claim 7, wherein the acquiring (S101) at least one resource allocation object set comprises:
acquiring a plurality of target resource allocation objects to be scheduled from an interface server, and grouping the plurality of target resource allocation objects to obtain at least one resource allocation object set, wherein a plurality of target resource allocation objects in the same resource allocation object set belong to a same process, or belong to concurrent associated processes, or are configured with same identification information;
wherein the allocating, from the plurality of candidate scheduler instances, a target scheduler instance for a first resource allocation object set of the at least one resource allocation object set comprises:
allocating, from the plurality of candidate scheduler instances, a target scheduler instance for the first resource allocation object set when a number of the target resource allocation objects comprised in the first resource allocation object set in a preset time is not less than a preset number; or
determining to skip allocating a target scheduler instance for the first resource allocation object set when the number of the target resource allocation objects comprised in the first resource allocation object set in the preset time is less than the preset number.

9. The resource scheduling method according to claim 1, after the acquiring a target resource allocation object to be scheduled, further comprising:
adding the target resource allocation object to a first queue;
wherein the allocating, from a plurality of candidate scheduler instances, a target scheduler instance for the target resource allocation object comprises:
fetching a target resource allocation object from the first queue by using a first preset strategy, and allocating, from the plurality of candidate scheduler instances, a target scheduler instance for the fetched target resource allocation object.

10. The resource scheduling method according to claim 1, wherein the pre-allocating, by the target scheduler instance and from a resource node cluster, a resource node for the target resource allocation object comprises:
adding one or more target resource allocation objects allocated to the target scheduler instance to a second queue; and
fetching, by the target scheduler instance, a target resource allocation object from the second queue by using a second preset strategy, and pre-allocating a resource node for the fetched target resource allocation object;
wherein the fetching, by the target scheduler instance, a target resource allocation object from the second queue by using a second preset strategy comprises:
determining a priority of each target resource allocation object in the second queue, and fetching, by the target scheduler instance, a target resource allocation object from the second queue according to the priority; and
wherein the acquiring a target resource allocation object to be scheduled comprises:
acquiring initial resource allocation objects to be scheduled from different scheduling systems, and converting the initial resource allocation objects to the target resource allocation objects.

11. The resource scheduling method according to claim 1, further comprising:
when failing to pass the conflict detection, re-performing the pre-allocation of resource node for the target resource allocation object, by the target scheduler instance, from the resource node cluster; or
when failing to preempt the pre-allocated resource node, re-performing the conflict detection on the pre-allocated resource node based on the optimistic concurrency strategy.

12. A resource scheduling system, comprising an interface server, a first scheduling terminal, a second scheduling terminal, a scheduling execution terminal, and a resource node cluster;
wherein the interface server is configured to acquire a target resource allocation object to be scheduled;
wherein the first scheduling terminal is configured to allocate, from a plurality of candidate second scheduling terminals, a target second scheduling terminal for the target resource allocation object;
wherein the second scheduling terminal is configured to pre-allocate, from the resource node cluster, a resource node for the target resource allocation object, to obtain a pre-allocated resource node corresponding to the target resource allocation object; and
wherein the scheduling execution terminal is configured to perform conflict detection on the pre-allocated resource node based on an optimistic concurrency strategy, preempt the pre-allocated resource node after passing the conflict detection, and schedule the target resource allocation object to run on the pre-allocated resource node.

13. An electronic device (600), comprising at least one processor (601) and a memory (602, 603, 608);
wherein the memory (602, 603, 608) stores computer-executable instructions, and the computer-executable instructions, when executed by the at least one processor, cause the at least one processor (601) to:
acquire a target resource allocation object to be scheduled;
allocate, from a plurality of candidate scheduler instances, a target scheduler instance for the target resource allocation object, and pre-allocate, by the target scheduler instance and from a resource node cluster, a resource node for the target resource allocation object, to obtain a pre-allocated resource node corresponding to the target resource allocation object;
perform conflict detection on the pre-allocated resource node based on an optimistic concurrency strategy, and preempt the pre-allocated resource node after passing the conflict detection; and
schedule the target resource allocation object to run on the pre-allocated resource node.

14. A computer-readable storage medium, storing computer-executable instructions which, when executed by a processor, cause the processor to implement the resource scheduling method according to any one of claims 1 to 11.

15. A computer program product, comprising computer-executable instructions which, when executed by a processor, cause the processor to implement the resource scheduling method according to any one of claims 1 to 11.
